# EUROPEAN PATENT SPECIFICATION

(11) **EP 2 244 946 B1**
(45) Date of publication and mention of the grant of the patent: **13.05.2015**
(21) Application number: 09714393.7
(22) Date of filing: 28.01.2009
(51) Int. Cl.: F01D 25/00, B08B 9/00, B08B 3/00, B08B 3/02, B64F 5/00

(54) **AEROENGINE WASHING SYSTEM AND METHOD**
FLUGTRIEBWERKWASCHSYSTEM UND -VERFAHREN
SYSTÈME ET PROCÉDÉ DE LAVAGE DE MOTEUR D'AVION

(30) Priority: 26.02.2008 GB 0803438
(43) Date of publication of application: 03.11.2010
(73) Proprietor: Rolls-Royce plc, London SW1E 6AT (GB)
(72) Inventor: DU PLESSIS, James, Peter, Derby DE24 8BJ (GB)
(74) Representative: Roberts, Nicholas John
(86) International application number: PCT/GB2009/000236
(87) International publication number: WO 2009/106792

(56) References cited:
- GB-A- 759 369
- US-A- 5 899 217
- US-A1- 2003 209 256

## Description

The present invention relates to a system and a method for washing an aeroengine and particularly, but not exclusively, a mobile washing system.

During the service life of a gas turbine engine and particularly aeroengines, engine derived contaminants and ingestion of airborne particles lead to a build up of matter on aerodynamic surfaces such as fan blades, blades and vanes of compressors and turbines and airflow duct walls. This undesirable build-up of matter causes a loss of efficiency of the engine leading to reduced thrust and/or increased fuel burn resulting in increased environmental pollution compared to a clean engine. For the engine's operator this loss of efficiency increases fuel costs and results in shorter intervals between engine overhauls.

Washing aeroengines to improve engine performance is well known and usually comprises spraying a liquid into the engine's intake or directly into core turbomachinery of the engine, while the engine is being cranked over. A suitable engine wash recovery system is known from US 5,899,217 which is considered being the closest prior art disclosing the features of the preamble of claim 1. A suitable waste washing liquid collection device is described in detail in PCT/GB2007/002927. A suitable pressurised and mobile washing rig is available from A.T. Jupiter (Liverpool) Ltd. The washing liquid cleans the fan blades and enters the core of the engine where it washes the core compressors and turbines. The washing effluent becomes contaminated to an extent and therefore the effluent must be captured and treated prior to it being disposed of or re-used.

Washing effluent is discharged via the engine's bypass and core exhausts and is captured by the washing liquid collection device described in PCT/GB2007/002927. Washing liquid is also discharged through drain holes in the underside of the nacelle surrounding the engine and an under-engine collection tray is provided. The nacelle commonly comprises two C-shaped ducts that are hinged from the top of the engine or pylon and are latched together on the underside of the engine. During engine washing it has been found that washing liquid seeps through the nacelle where the C-shaped ducts meet and also from the nacelle's inlet. During engine washing and afterwards while the engine has stopped rotating and is draining, the washing fluid runs forwards and out of the engine core and egresses the inlet and through the nacelle. This washing fluid may be contaminated and requires collection.

A further problem is accommodating various sizes of gas turbine engines and also the different positions of the engines, which can vary substantially either from aircraft to aircraft or on one aircraft having inboard and outboard engines on each wing.

Therefore it is an object of the present invention to provide a washing collection system and a method of operating the system that is capable of collecting all washing fluid issuing from the engine during and after washing, accommodating many different engine sizes and heights and is compact enough in its stowed position for easy transportation.

In accordance with the present invention a collector for collecting washing fluid issuing from a gas turbine engine during and/or after a washing operation, the collector comprises, a collection tray and an inlet collector connected at a first end to the collection tray and is characterised in that at its second end is connected to an inlet of the engine, thereby the inlet collector collects washing fluid issuing from any one or both the inlet and below the engine.

Preferably, the collection tray comprises a drip tray. Alternatively, the collection tray comprises a floor of an engine washing cart.

Preferably, the inlet collector extends forwardly of the inlet.

Preferably, the inlet collector comprises extendable means capable of extending the inlet collector between the collection tray and in front of the inlet to accommodate different engine types, sizes, positions and the position of the collection tray.

Preferably, the inlet collector comprises a flexible sheet material.

Preferably, the inlet collector comprises a storage roller for storing and deploying the flexible sheet material.

Alternatively, the inlet collector comprises a moveable bar mounted to the collection tray. Preferably, the sheet is anchored at its first end to the collection tray and extends around the moveable bar.

Preferably, the moveable bar is mounted to the collection tray via a slidable arrangement that extends between the ends of the collection tray.

Preferably, the extendable means comprises a locking means and/or a tensioning means.

Preferably, the inlet collector comprises a guide to ensure the sheet remains in a concave shape with respect to its upper surface. Preferably, the guide defines a U-shaped or V-shaped aperture through which the sheet passes.

Alternatively, the inlet collector comprises a rigid panel. The rigid panel is mounted to the collection tray preferably via a slidable arrangement that extends between the ends of the collection tray.

Additionally, the rigid panel may be held in place by a further support means.

Preferably, the extendable means is located on the drip tray or floor / rear part of an engine washing cart.

Preferably, the inlet collector comprises a hook at its second end to connect to the inlet.

Preferably, the hook is configured so that the sheet or rigid panel forms a concave or dished upper surface.

Preferably, the hook comprises a frame having at least two generally C-shaped members.

Alternatively, the hook comprises a frame having three generally C-shaped members; the central C-shaped member subtends a greater arc than the outer two members and causes the sheet to form a concave or dished upper surface.

Preferably, the hook comprises grips means to enhance friction with the inlet.

Preferably, the hook comprises a biased arm which contacts the inlet and is capable of accommodating a wide range of inlet sizes.

Usefully, a washing cart comprising a collector as described above.

In another aspect of the present invention, a method of washing a gas turbine engine with a collector as described above comprising the step of connecting the inlet collector to the inlet.

The present invention will be more fully described by way of example with reference to the accompanying drawings in which:
Figure 1 is a schematic section of a ducted fan gas turbine engine and a mobile engine washing cart comprising a washing liquid collection device in accordance of the present invention;
Figures 2-7B show various views of a first embodiment of the washing liquid collection device in accordance of the present invention;
Figures 8-9 show plan and side views of a second embodiment of the washing liquid collection device in accordance of the present invention.
Figures 10-11 show plan and side views of a third embodiment of the washing liquid collection device in accordance of the present invention.

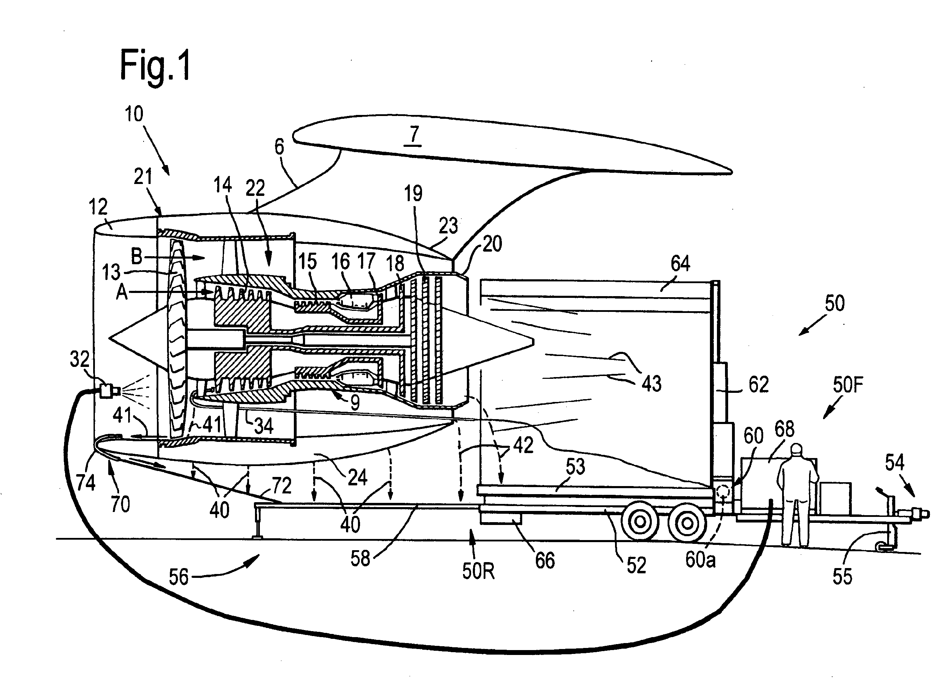

Referring to Figure 1, a ducted fan gas turbine engine generally indicated at 10 is suspended via a pylon 6 from a wing 7 of an aircraft. The engine 10 comprises, in axial flow series, an air intake 12, a propulsive fan 13, a core engine 9 comprising an intermediate pressure (IP) compressor 14, a high-pressure (HP) compressor 15, combustion equipment 16, a HP turbine 17, and IP turbine 18, a low-pressure (LP) turbine 19 and a core exhaust nozzle 20. A nacelle 21 generally surrounds the engine 10 and defines the intake 12, a bypass duct 22 and an exhaust nozzle 23. The nacelle 21 comprises two generally C-shaped ducts 24 that are hinged from the top of the engine 10 or the pylon 6 and are latched together at the underside of the engine.

The gas turbine engine 10 works in the conventional manner so that air entering the intake 12 is accelerated by the fan 13 to produce two air flows: a first airflow A into the IP compressor 14 and a second airflow B which passes through a bypass duct 22 to provide propulsive thrust. The IP compressor 14 compresses the airflow A directed into it before delivering that air to the HP compressor 15 where further compression takes place.

The compressed air exhausted from the HP compressor 15 is directed into the combustion equipment 16 where it is mixed with fuel and the mixture combusted. The resultant hot combustion products then expand through, and thereby drive the HP, IP and LP turbines 17, 18, 19, via suitable interconnecting shafts, before being exhausted through the nozzle 20 to provide additional propulsive thrust. The HP, IP and LP turbines 17, 18, 19 respectively drive the HP and IP compressors 15, 14 and the fan 13 by suitable interconnecting shafts.

When this engine 10 is washed it may be either nonrotating, cranked via a gearbox (not shown) or at idle speed i.e. self powering. Cranking the engine 10 is particularly beneficial when the core engine 9 is washed as the cleaning fluid is forced through the engine's many rows of blades and vanes in the compressors and turbines thereby aiding cleaning.

During engine washing waste fluids emerge from a) drainage holes (not shown) in underside of the nacelle 21 as streams or droplets 40, b) the engine's inlet as streams or droplets 41, c) the nozzles 20, 23 shown by streams or droplets 42 and d) the nozzles 20, 23 as droplets 43 carried in the efflux particularly when the engine is being cranked over or is at idle. As the effluent may contain contaminants that might be harmful to the environment this waste fluid is required to be collected and treated. For this purpose a mobile waste fluid collection cart 50 is provided generally in accordance with the cart as disclosed in International patent application PCT/GB2007/002927 to the present applicant, and which the teachings of are incorporated herein.

Furthermore, during engine washing it has been found that washing liquid also seeps through the nacelle 21 where the C-shaped ducts 24 meet and also from the nacelle's inlet 12. During an engine washing operation and afterwards while the engine has stopped rotating and is draining, the washing fluid runs forward and out of the engine core (arrow 41) and can egress the inlet 12 and passes through the nacelle as streams or droplets 40. This washing fluid may be contaminated by core engine contaminates and/or contaminates present on in the bypass duct 22 and therefore requires collection.

The cart 50 also comprises a washing system 68 comprising a fluid reservoir, a storage tank, a power generator, a filtration device and a heating / jet wash system connected to the nozzle 32. The heating / jet wash system includes a pump for pressurising washing fluid to the nozzle 32. A further pump is provided on the cart 50 to transfer waste fluid from the sump 66 to the filtration device or the storage tank. Washing fluid is directed at the fan blades 13 and is then sucked into the core engine 9 to clean the compressors 14, 15 and turbines 17, 18, 19. However, for some engines it is preferable to hand clean the fan blades 13 and therefore a rigid hose 34 may be used to inject washing fluid directly into the core engine 9. The rigid hose 34 comprises a hook which conveniently secures the hose 34 to the inlet or splitter fairing of the core engine; the hose 34 being inserted forwardly along the bypass duct from the exhaust nozzle 23.

The mobile waste fluid collection cart 50 is similar to that described in PCT/GB2007/002927 and comprises a wheeled chassis or platform 52 having at a front end 50F a towing attachment 54 and rearwardly a washing liquid collector 56. The washing liquid collector 56 comprises an under-engine drip tray 58, a floor 53 of the cart 50 and a sump 66. In accordance with the present invention, the collector 56 also comprises an inlet collector 70 that extends from a first end 72 that is connected to the drip tray 58 and a second end 74 that is connected to the inlet 12 of the engine 10.

Alternatively, the under-engine drip tray 58 may be omitted and so the collector 56 comprises only the inlet collector 70 that now extends from its first end 72 that is connected to the rear of the cart 50R / floor 53. The second end 74 remains connected to the inlet 12 of the engine 10.

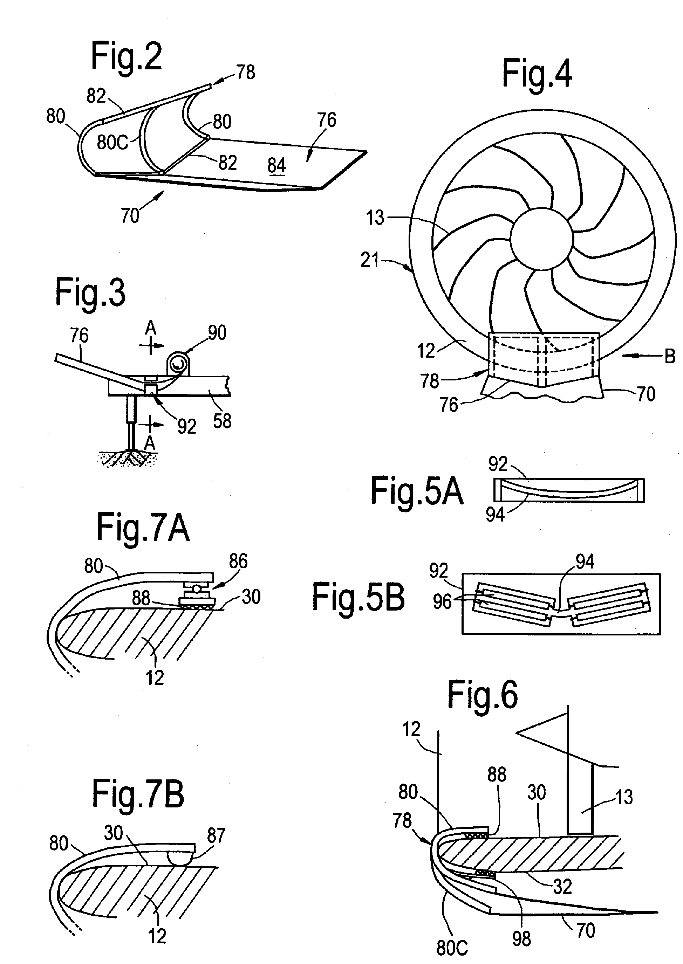

Figures 2-7 show a first embodiment of the inlet collector 70 in more detail. The inlet collector 70 extends from the drip tray 58 (or the rear of the cart 50R or floor 53) and is connected to the inlet 12 of the engine 10 prior to, during and preferably for a time after a washing cycle. The inlet collector 70 comprises a resilient, impermeable sheet 76 and a frame 78. The frame 78 is hooked such that it is complimentary to the shape of the inlet 12 and is in contact with the surface 30 of the inlet 12. The impermeable sheet 76 is wrapped around the opposite side or outside of the frame 78 to the inlet's surface so that there is a gap between the inlet's surface and the sheet 76 to allow washing liquid to flow out of the inlet and onto the sheet 76.

The frame 76 preferably comprises three generally C-shaped members 80, joined together by further members 82. Preferably the members 80, 82 are fabricated from tubular metal although any reasonably rigid lightweight materials can be used. As can be seen in Figures 3 and 4, the central C-shaped member 80C subtends a greater arc than the outer two members 80 and causes the sheet 76 to form a concave or dished upper surface 84. Furthermore, the central C-shaped member 80 holds the sheet 76 away from the surface 30 of the inlet 12 at its bottom dead-centre where the washing liquid 41 is most likely to flow.

The inlet collector 70 comprises a storage roller 90 and a guide 92 which are conveniently located on the drip tray 58 or the rear of the cart 50R / floor 53. Therefore the sheet 76 may be stowed on the storage roller 90 for transportation, may be deployed for engine washing to varying lengths depending on positioning of the drip tray 58 and/or cart 50 and may easily accommodate the many different engine sizes and positions on various types of aircraft. The storage roller 90 is provided with a tensioning means and a locking mechanism (such devices are well known in the art) so that the sheet 76 is sufficiently taught to ensure it remains concave and retains a sufficient angle to drain the washing fluid towards the drip tray 58.

The guide 92 is provided aft of the storage roller 90 and defines, in one form, a U-shaped or V-shaped aperture 94 through which the sheet 76 is fed. The shape of the aperture 94 further helps to ensure the sheet 76 remains in a concave shape with respect to its upper surface 84. In its simplest form, shown in Figure 5A, the guide 92 is an aperture through which the sheet 76 slides, however, in Figure 5B, the guide 92 comprises pairs of rollers 96 mounted in a housing. The rollers 96 may comprise the tensioning means and locking mechanism to tighten the sheet 76.

In Figure 6 details of the frame 78 can be seen more clearly. The outer C-shaped members 80 engage the surface 30 of the inlet 12 and are provided with rubber grips 98 to protect the inlet surface 30 and to enhance the contact friction to better hold the frame 78 in position. It should be appreciated that the rubber grips 88 may be replaced by other grip enhancing means to assist retention of the frame 78 in the inlet 12. Although the C-shaped members 80, 80C may be sized to fit snugly to the shape of the inlet of one particular engine type, it is most convenient to be able to accommodate a wide range of inlet sizes for different engine types. For this purpose the outer C-shaped members 80 comprise a biased arm 98 which contacts an outer surface 32 of the inlet 12. The arm 98 is preferably rigid and biased by a resilient device 100, which in this case is rubber. Other biasing devices may be used to provide the arm 100 with a biasing force such as a spring. Alternatively, the arm 98 may be self-sprung and made from a resilient material and further the frame itself may be a flexible resilient material such that it is openable and provides a clamping force around the inlet 12. Other attachment means are also envisaged to be within the scope of the invention and one such means is a screw threaded clamp.

Alternatively, the biased arm 98 could be arranged to contact the radially inner surface 30 of the inlet 12.

It should be appreciated that the frame 78 could comprise a single, a pair or more than three members 80.

Referring to Figure 7A, the rubber grips 98 that protect the inlet surface 30 and enhance the contact friction to improve grip, may be mounted on a ball joint 86. The ball joint 86 is capable of presenting the rubber grips 98 generally normal to the surface 30, thereby accommodating the different surface angles of a wide range of engine types. As an alternative to the ball joint 86, a simple resilient hemisphere 87, as shown in Figure 7B, or a half-cylinder would suffice. Neoprene^{®} is an ideal material for contacting the surface 30, although other high-grip materials are equally applicable.

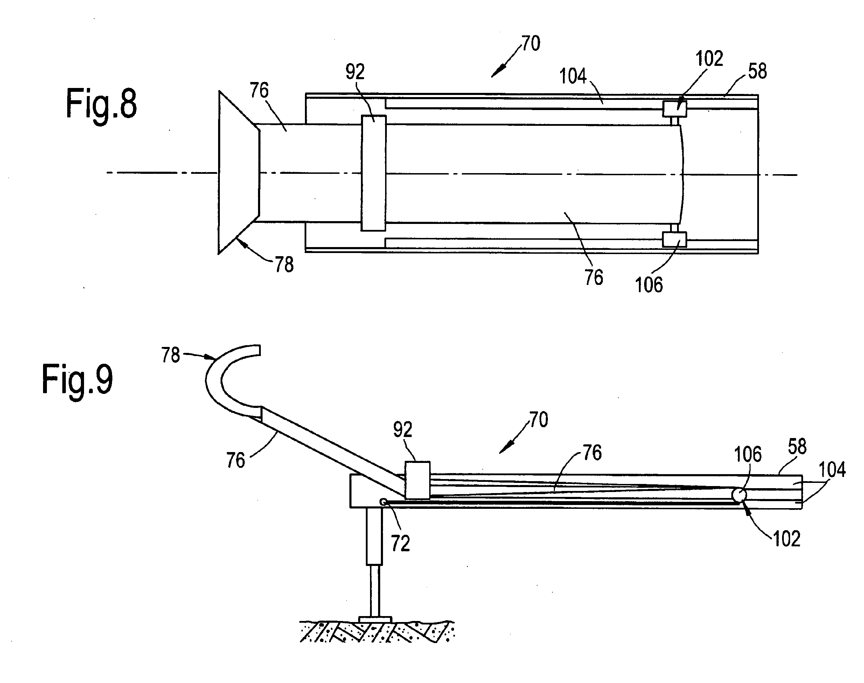

Figures 8 and 9 show side and plan views of the washing liquid collection device 56 comprising a second embodiment of the inlet collector 70 in accordance of the present invention. This second embodiment of the inlet collector 70 comprises a similar flexible, impermeable sheet 76 that is anchored at its first end 72 to the drip tray 58 and extends around a moveable bar 102 that is mounted to the drip tray 58. The sheet 76 continues through the guide 92 to the frame 78 for connection with the inlet 12 of the engine as described earlier.

The moveable bar 102 is mounted to the drip tray 58 via a slide rail arrangement 104 that extends between the ends of the drip tray 58. The rail arrangement 104 is well known in the art and simply comprises a track to capture wheels 106 of the roller 102 so that it is adjustable along the length of the drip tray 58. The moveable bar 102 may conveniently comprise a roller to aid the sheet 76 passing around it. The inlet collector 70 comprises a locking means to locate the moveable bar 102 once the frame 78 has been connected to the inlet 12. The moveable bar 102 may be moved to tension the sheet 76 and then locked in place.

This second configuration of inlet collector 70 may be mounted directly to the cart 50 and here the drip tray 58 is omitted.

It will be apparent to the skilled reader that the flexible sheet 76 is narrower than the collector tray so that waste liquid flows off the sides of the sheet 76 and onto the collection tray.

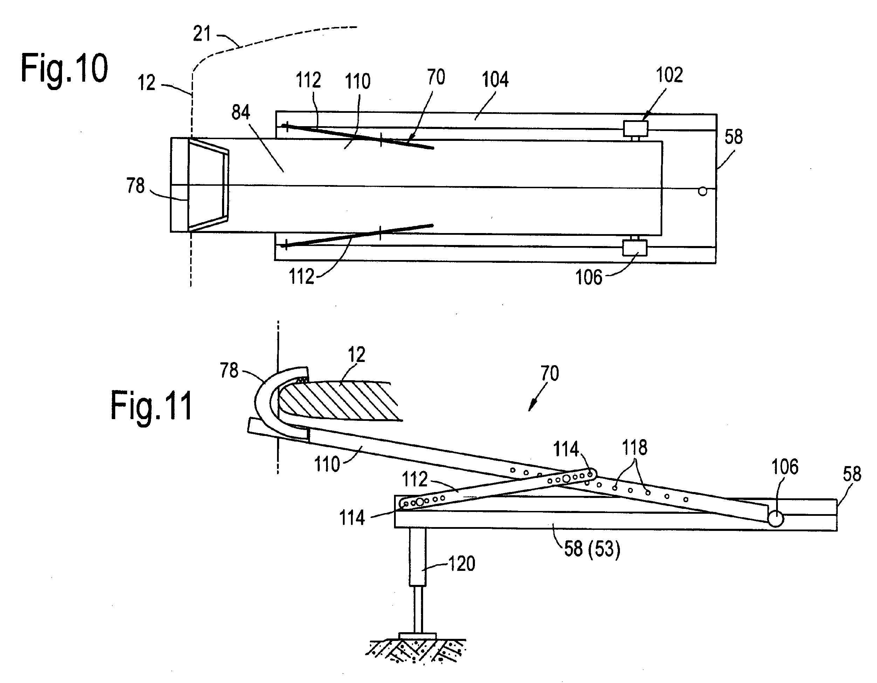

A third embodiment of the inlet collector 70 is shown in Figures 10 and 11. Here the inlet collector 70 comprises a rigid panel 110 that is extendable under the engine between the drip tray 58 and the inlet 12. Preferably, the rigid panel 110 is extendable in front of the inlet 12 to catch drips or a stream of washing fluid 41 that egresses the inlet 12 during and/or after a washing operation. The rigid panel 110 is mounted to the drip tray 58 via a rail arrangement 104 that extends between the ends (front and rear) of the drip tray 58. The rail arrangement 104 is well known in the art and simply comprises a track to capture wheels or a slide 106 so that the extension of the rigid panel 110 is adjustable. The inlet collector 70 comprises a locking means to locate the wheels 106 once the frame 78 has been connected to the inlet 12.

The rigid panel 110 is attached to the inlet 12 in similar fashion as described above and may include further support means. Preferably the further support means is a pair of struts 112, one each lateral side of the rigid panel 110. Each strut 112 defines a series of holes 114 that can engage any of the series of pins 116 on the rigid frame 110. The holes 114 in combination with the pins 116 enable a wide range of positions for the rigid panel 110 to take up. Other further support means may easily be provided instead of the struts 114 such as a hydraulic or pneumatic piston.

Conveniently, the rigid panel 110 may be a complimentary shape and size to lay compact against the drip tray 58 or floor of the cart 53.

Referring again to Figure 11, an extendable leg 120 is preferably provided to allow for adjustment of the height of the drip tray 58 to ensure collected washing liquid flows towards the sump 66 (Figure 1).

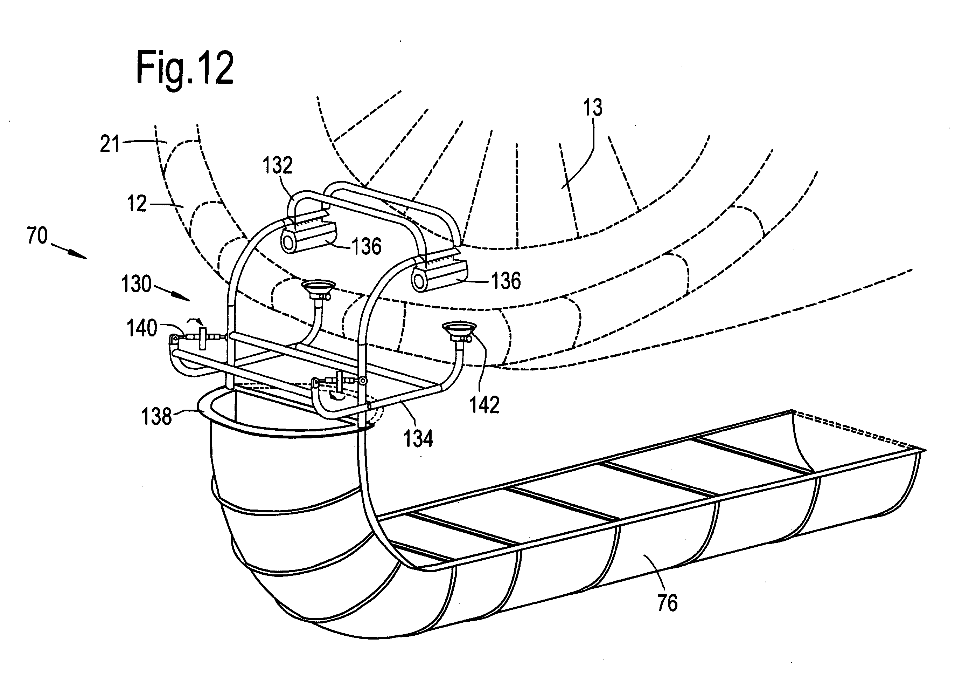

Figure 12 shows another alternative embodiment of the present invention. The inlet collector 70 comprises a clamping arrangement 130 at its second end 74 to connect to the inlet 12 of the engine. The clamping arrangement 130 comprises a frame having a fixed part 132 and a rotatable part 134 mounted to the fixed part 132. At one end of the fixed part 132 are two feet 136, which locate on the radially inner surface of the inlet 12, and at the other end an end frame 138 that attaches to the flexible sheet 76. The end frame 138 is arcuate so that the sheet 76, or indeed a rigid panel, forms a concave or dished upper surface for collecting washing liquid issuing from the engine and as previously discussed. The rotatable part 134 is attached to the fixed part via a pin or similar and also via extendable devices 140. The rotatable part 134 further comprises two suckers 142, mounted on universal joints, which locate on the radially outer surface of the inlet 12. Once fitted to the inlet the extendable devices 140 are extended to increase the clamping force about the inlet. It should be appreciated that the clamping arrangement may comprise a single foot 136 or a single sucker 142 or may even include a plurality of feet or suckers.

## Claims

1. A collector (56) for collecting washing fluid issuing (40, 41) from a gas turbine engine (10) during and/or after a washing operation, the collector (56) comprises, a collection tray (58, 53) and an inlet collector (70) connected at a first end (72) to the collection tray (58, 53) and is **characterised in that** its second end (74) is adapted to be connected to an inlet (12) of the engine (10), thereby the inlet collector (70) collects washing fluid (40, 41) issuing from any one or both the inlet (21) and below the engine (10).

2. A collector (56) as claimed in claim 1 wherein the collection tray (58, 53) comprises a drip tray (58) or a floor (53) of an engine washing cart (50).

3. A collector (56) as claimed in any one of claims 1-2 wherein the inlet collector (70) is adapted to extend forwardly of the inlet (12).

4. A collector (56) as claimed in any one of claims 1-3 wherein the inlet collector (70) comprises extendable means (90, 104) capable of extending the inlet collector (70) between the collection tray (58, 53) and in front of the inlet (12) to accommodate different engine types, sizes, positions and the position of the collection tray (58, 53).

5. A collector (56) as claimed in any one of claims 1-4 wherein the inlet collector (70) comprises a flexible sheet material (76).

6. A collector (56) as claimed in any one of claims 1-4 wherein the inlet collector (70) comprises a moveable bar (102) mounted to the collection tray (58, 53).

7. A collector (56) as claimed in claim 6 wherein the sheet (76) is anchored at its first end (72) to the collection tray (58, 53) and extends around the moveable bar (102).

8. A collector (56) as claimed in any one of claims 1-4 wherein the inlet collector (70) comprises a rigid panel (110).

9. A collector (56) as claimed in claim 8 wherein the rigid panel (110) is mounted to the collection tray (58, 53) via a slidable arrangement (104) that extends between the ends of the collection tray (58, 53).

10. A collector (56) as claimed in claim 4 and any claim dependent thereon, wherein the extendable means (90, 104) is located on the drip tray (58) or floor (53) / rear part (50) of an engine washing cart (50R).

11. A collector (56) as claimed in any one of claims 1-10 wherein the inlet collector (70) comprises a hook (78) at its second end (74) to connect to the inlet (12).

12. A collector (56) as claimed in claim 19 wherein the hook (78) is configured so that the sheet (76) or rigid panel (110) forms a concave or dished upper surface (84).

13. A collector (56) as claimed in any one of claims 11-12 wherein the hook (78) comprises a frame (76) having at least two generally C-shaped members (80).

14. A collector (56) as claimed in any one of claims 11-12 wherein the hook (78) comprises a frame (76) having three generally C-shaped members (80), the central C-shaped member (80C) subtends a greater arc than the outer two members (80) and causes the sheet (76) to form a concave or dished upper surface (84).

15. A method of washing a gas turbine engine with a collector (56) as claimed in any one of claims 1-14, the method comprising the step of connecting the inlet collector (70) to the inlet (12).

## Patentansprüche

1. Kollektor (56) zum Sammeln von Waschflüssigkeits-Emission (40, 41) aus einem Gasturbinenmotor (10) während und/oder nach einem Waschvorgang, wobei der Kollektor (56) eine Auffangschale (58, 53) und einen Kollektoreinlass (70) aufweist, der am ersten Ende (72) an der Auffangschale (58, 53) befestigt ist und **dadurch gekennzeichnet ist, dass** sein zweites Ende (74) angepasst ist, um an einem Einlass (12) des Motors (10) befestigt zu sein, wodurch der Kollektoreinlass (70) Waschflüssigkeit (40, 41) sammelt, die vom Einlass (21) und/oder unter dem Motor (10) abgegeben wird.

2. Kollektor (56) nach Anspruch 1, wobei die Auffangschale (58, 53) eine Abtropfschale (58) oder einen Boden (53) eines Motor-Waschwagens (50) umfasst.

3. Kollektor (56) nach jedem der Ansprüche 1 bis 2, wobei der Kollektoreinlass (70) angepasst ist, um sich nach vorne von dem Einlass (12) zu erstrecken.

4. Kollektor (56) nach jedem der Ansprüche 1 bis 3, wobei der Kollektoreinlass (70) verlängerbare Mittel (90, 104) umfasst, die den Kollektoreinlass (70) zwischen der Auffangschale (58, 53) und vor dem Einlass (12) verlängern können, um verschiedene Motortypen, -größen, -positionen und die Position der Auffangschale (58, 53) aufzunehmen.

5. Kollektor (56) nach jedem der Ansprüche 1 bis 4, wobei der Kollektoreinlass (70) ein flexibles Plattenmaterial (76) umfasst.

6. Kollektor (56) nach jedem der Ansprüche 1 bis 4, wobei der Kollektoreinlass (70) eine bewegliche Stange (102) umfasst, die an der Auffangschale (58, 53) befestigt ist.

7. Kollektor (56) nach Anspruch 6, wobei die Platte (76) an ihrem ersten Ende (72) in der Auffangschale (58, 53) verankert ist und sich um die bewegliche Stange (102) erstreckt.

8. Kollektor (56) nach jedem der Ansprüche 1 bis 4, wobei der Kollektoreinlass (70) eine feste Platte (110) umfasst.

9. Kollektor (56) nach Anspruch 8, wobei die feste Platte (110) über eine verschiebbare Anordnung (104), die sich zwischen den Enden der Auffangschale (58, 53) erstreckt, an der Auffangschale (58, 53) befestigt ist.

10. Kollektor (56) nach Anspruch 4 und jedem davon abhängigen Anspruch, wobei sich das verlängerbare Mittel (90, 104) auf der Abtropfschale (58) oder dem Boden (53) / hinteren Teil (50) eines Motor-Waschwagens (50R) befindet.

11. Kollektor (56) nach jedem der Ansprüche 1 bis 10, wobei der Kollektoreinlass (70) einen Haken (78) an seinem zweiten Ende (74) zur Verbindung mit dem Einlass (12) umfasst.

12. Kollektor (56) nach Anspruch 19, wobei der Haken (78) konfiguriert ist, so dass die Platte (76) oder feste Platte (110) eine konkave oder gewölbte obere Fläche (84) formt.

13. Kollektor (56) nach jedem der Ansprüche 11 bis 12, wobei der Haken (78) einen Rahmen (76) umfasst, der mindestens zwei im Allgemeinen C-förmige Bauteile (80) aufweist.

14. Kollektor (56) nach jedem der Ansprüche 11 bis 12, wobei der Haken (78) einen Rahmen (76) aufweist, der drei im Allgemeinen C-förmige Bauteile (80) aufweist, wobei das zentrale C-förmige Bauteil (80C) einen größeren Bogen schneidet als die äußeren zwei Bauteile (80) und dazu führt, dass die Platte (76) eine konkave oder gewölbte obere Fläche (84) formt.

15. Verfahren zum Waschen eines Gasturbinenmotors mit einem Kollektor (56) nach jedem der Ansprüche 1 bis 14, wobei das Verfahren den Schritt der Verbindung des Kollektoreinlasses (70) mit dem Einlass (12) aufweist.

## Revendications

1. Un collecteur (56) recueillant un fluide de lavage (40, 41) provenant d'un moteur à turbine à gaz (10) pendant et/ou après une intervention de lavage, le collecteur (56) comprenant un bac de collecte (58, 53) et un collecteur d'entrée (70) raccordé à un premier bout (72) du bac de collecte (58, 53), et **caractérisé par le fait que** son deuxième bout (74) est adapté pour être raccordé à un orifice d'entrée (12) du moteur (10), en permettant ainsi au collecteur d'entrée (70) de recueillir le fluide de lavage (40, 41) provenant d'un ou des deux orifices d'entrée (21) et sous le moteur (10).

2. Un collecteur (56) selon la revendication 1 dans lequel le bac de collecte (58, 53) comprend un plateau d'égouttage (58) ou un plancher (53) d'un chariot de lavage de moteur (50).

3. Un collecteur (56) selon une quelconque des revendications 1 - 2, dans lequel le collecteur d'entrée (70) est adapté pour se prolonger vers l'avant par rapport à l'orifice d'entrée (12).

4. Un collecteur (56) selon une quelconque des revendications 1 - 3, dans lequel le collecteur d'entrée (70) comprend un dispositif extensible (90, 104) capable d'assurer l'extension du collecteur d'entrée (70) entre le bac de collecte (58, 53) et devant l'orifice d'entrée (12) afin de pouvoir accueillir différents types, tailles et positions de moteur, et s'adapter à la position du bac de collecte (58, 53).

5. Un collecteur (56) selon une quelconque des revendications 1 - 4, dans lequel le collecteur d'entrée (70) comprend une matière sous forme de feuille souple (76).

6. Un collecteur (56) selon une quelconque des revendications 1 - 4, dans lequel le collecteur d'entrée (70) comprend une barre mobile (102) montée sur le bac de collecte (58, 53).

7. Un collecteur (56) selon la revendication 6, dans lequel la feuille (76) est ancrée sur son premier bout (72) au bac de collecte (58, 53), et s'étend autour de la barre mobile (102).

8. Un collecteur (56) selon une quelconque des revendications 1 - 4, dans lequel le collecteur d'entrée (70) comprend un panneau rigide (110).

9. Un collecteur (56) selon la revendication 8, dans lequel le panneau rigide (110) est monté sur le bac de collecte (58, 53) à travers un système coulissant (104) s'étendant entre les extrémités du bac de collecte (58, 53).

10. Un collecteur (56) selon la revendication 4 et toute autre revendication qui en découle, dans lequel le système coulissant (90, 104) est situé sur le plateau d'égouttage (58) ou le plancher (53) / la partie postérieure (50) d'un chariot de lavage de moteur (50R).

11. Un collecteur (56) selon une quelconque des revendications 1 - 10, dans lequel le collecteur d'entrée (70) comprend un crochet (78) sur sa deuxième extrémité (74) pour le raccordement à l'orifice d'entrée (12).

12. Un collecteur (56) selon la revendication 19, dans lequel le crochet est configuré de sorte que la feuille (76) ou le panneau rigide (110) forme une surface supérieure concave ou bombée (84).

13. Un collecteur (56) selon une quelconque des revendications 11 - 12, dans lequel le crochet (78) comprend un châssis (76) possédant au minimum deux éléments à forme générale de « C » (80).

14. Un collecteur (56) selon une quelconque des revendications 11 - 12, dans lequel le crochet (78) comprend un châssis (76) possédant trois éléments à forme générale de « C » (80), l'élément central à forme de « C » (80c) sous-tendant un arc supérieur aux deux éléments extérieurs (80) et sous l'effet duquel la feuille (76) forme une surface supérieure concave ou bombée (84).

15. Une méthode de lavage d'un moteur à turbine à gaz avec un collecteur (56) selon une quelconque des revendications 1 - 14, cette méthode comprenant le raccordement du collecteur d'entrée (70) à l'orifice d'entrée (12).
